# EUROPEAN PATENT APPLICATION

(11) **EP 4 135 137 A1**
(43) Date of publication of application: **15.02.2023**
(21) Application number: 21190339.8
(22) Date of filing: 09.08.2021
(51) Int. Cl.: H02G 1/10, H02G 9/12, B63B 21/50

(54) **OFFSHORE ARRANGEMENT AND METHOD FOR CONNECTING A FLOATING INSTALLATION OF AN OFFSHORE ARRANGEMENT WITH AT LEAST ONE ENERGY CABLE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

An offshore arrangement (8), in particular offshore wind farm, with at least one floating installation (9, 10), the at least one floating installation (9) comprising:
a floating foundation (11),
at least one mooring line (14) for mooring the floating foundation (11) to the seabed (13), and
at least one energy cable (16) for transmitting energy to or from the at least one floating installation (9) to or from another offshore and/or onshore installation (10), the at least one energy cable (16) being attached to the at least one mooring line (14).

By attaching the at least one energy cable to the at least one mooring line, the at least one energy cable hanging from the foundation to the seabed is better protected from loads caused by the dynamic offshore environment.

## Description

The present invention relates to an offshore arrangement and a method for connecting a floating installation of the offshore arrangement with at least one energy cable.

Due to the large wind speeds at offshore sites, a high annual energy production is possible with offshore wind turbines and wind farms. Although offshore wind turbines are usually installed close to coastal regions, the water depth can nevertheless reach up to 40 meters or more. Such large water depths may require the use of floating foundations moored to the seabed. The floating foundation may be fully or partly submerged (semi-submerged) in the sea water. Further, an offshore wind turbine requires a transmission link to another offshore or onshore installation, e.g., for transmission of generated power. The transmission link is commonly provided by connecting energy cables such as power cables to the offshore wind turbines. The energy cables are usually hanging from the foundation to the seabed. At the seabed, the energy cables are further guided in or above the seabed for connecting several offshore positions or the offshore position with an onshore position.

Due to the dynamic ocean environment, a floating foundation, its mooring lines and the energy cables may be exposed to heavy loads. For example, a movement of the floating foundation caused by wind, large waves, strong swell, tides and ocean currents can exert heavy forces on the mooring lines and power cables. Further, ocean currents at different depths below sea level can impose heavy loads on the energy cables connected to the structure. In order to withstand the dynamic loads at the offshore site caused by the movement of the floating foundation and the power cables themselves, robust flexible cables (non-rigid cables) are commonly used as energy cables for connecting (e.g., electrically connecting) floating wind turbines. However, these robust flexible cables are expensive.

It is one object of the present invention to provide an improved offshore arrangement and an improved method for connecting a floating installation of the offshore arrangement with at least one energy cable.

Accordingly, an offshore arrangement, in particular offshore wind farm, with at least one floating installation is proposed. The at least one floating installation comprises:
a floating foundation,
at least one mooring line for mooring the floating foundation to the seabed, and
at least one energy cable for transmitting energy to or from the at least one floating installation to or from another offshore and/or onshore installation, the at least one energy cable being attached to the at least one mooring line.

By attaching the at least one energy cable to the at least one mooring line, the at least one energy cable hanging from the foundation to the seabed is better protected from loads caused by the dynamic offshore environment. For example, the at least one energy cable is better protected from loads caused by movement of the floating foundation due to winds, waves, tides, currents and strong swell. Further, the at least one energy cable is better protected from loads caused by tides and ocean currents acting directly on the energy cables. Hence, the specifications of the energy cables with respect to withstanding heavy loads can be relaxed. Thus, manufacturing costs of the power cables can be reduced.

The offshore arrangement is, for example, an offshore wind turbine and/or an offshore wind farm comprising several offshore wind turbines.

Offshore does not only include marine environments but also lakes and other open waters.

The wind farm is, in particular, an array of inter-connected wind turbines. The offshore installation (e.g., the offshore wind turbine) may be, for example, connected by the energy cable to a neighboring offshore installation (e.g., neighboring offshore wind turbine) of the wind farm, another offshore installation of the wind farm and/or to an onshore installation.

The floating installation is, for example, an offshore wind turbine. The floating installation may also be another kind of offshore installation. For example, the floating installation may include a substation, collector substation, observer platform, another kind of energy producing installation, an oil platform and the like. A collector substation is, for example, a station configured to collect the energy generated by all or several of the wind turbines of the wind farm.

The floating installation, e.g., an offshore wind turbine, may include and/or be equipped with a gas producing unit such as a hydrogen electrolyzer. Especially an offshore wind turbine may be equipped with a hydrogen electrolyzer that utilizes electricity, e.g., electricity generated by the wind turbine and/or a neighboring wind turbine in a wind farm. The hydrogen may be purified and/or transformed into other products being gaseous or liquid products at the same floating installation, e.g., the wind turbine. Further, such produced gaseous or liquid products would then be transmitted via the at least one energy cable to another offshore or onshore installation. Accordingly, the gas producing unit may by example comprise a hydrogen electrolyzer and include any hydrogen gas treatment equipment (e.g., gas purifiers) and/or any hydrogen transforming equipment for transforming hydrogen into other gaseous or liquid products.

A wind turbine is an apparatus to convert the wind's kinetic energy into electrical energy. The wind turbine comprises, for example, a rotor having one or more blades, a nacelle including a generator, and a tower holding, at its top end, the nacelle. The tower of the wind turbine is connected to the floating foundation moored by the at least one mooring line to the seabed.

The floating foundation of the offshore installation is moored to the seabed by the at least one mooring line. For example, the floating foundation comprises two or three mooring lines moored to the seabed. The at least one offshore installation comprises, for example, one or more anchoring elements. The anchoring elements are, for example, anchored and/or buried in the seabed. Further, each of the at least one mooring line is, for example, connected to an anchoring element.

The at least one energy cable is, for example, attached to one of the at least one mooring line.

The at least one mooring line includes, for example, a wire rope comprising several wire bundles such as a steel wire, a polymeric rope, a chain such as a round link chain and/or steel chain.

The floating foundation is, for example, fully or partly submerged (semi-submerged) in the sea water.

The floating foundation includes, for example, a spar comprising one or more cylinders floating vertically in the water. The cylinder(s) may comprise ballast tanks in parts of the cylinder volume. The cylinder(s) may support a platform.

The floating foundation may also include, for example, a surface floating platform and/or semi-submersible foundation. This is a type of floating foundation that is partly submerged in seawater. It may comprise a submerged hull.

The floating foundation may also include, for example, a tension leg platform (TLP). The TLP comprises a platform situated below sea level and heavy steel rods anchored on the seabed using anchors, e.g., suction anchors. The TLP is kept at rest by means of steel rods. The at least one mooring line keeps the platform below sea level.

The at least one energy cable is, for example, a power cable and/or an electrical cable configured for transmission of energy generated by the offshore installation to another offshore and/or onshore installation. The at least one energy cable is, for example, a high voltage cable for transferring the electrical energy generated by the wind turbine to another offshore or onshore installation. The high voltage cable has, for example, a weight of 10 kg per meter or larger. However, the energy cable may also be another kind of energy cable.

According to an embodiment, the offshore arrangement comprises at least one protection tube accommodating the at least one energy cable, the at least one protection tube being attached to the at least one mooring line.

By having the at least one protection tube, the at least one energy cable can be better protected. Further, the tube allows an easy installation and/or replacement of the energy cable(s) .

The at least one protection tube is, for example, made from plastic, thermoplastics, polyethylene and/or high-density polyethylene. For example, high-density polyethylene provides a strong, durable, flexible and light weight tube. Alternatively, the protection tube may, for example, also be made from metal such as steel.

The tubes are, in particular, empty tubes. The tubes are, for example, flexible tubes. The tubes are, for example, flexible enough to be wound up on a reel or drum. The tubes may be used to guide the energy cables inserted into them during installation.

According to a further embodiment, the at least one mooring line is fixed at its first end to the floating foundation and is configured for being anchored at its second end to the seabed. Further, the at least one energy cable is attached to the at least one mooring line at one or more positions between the first end second ends of the mooring line.

Thus, a movement of the at least one energy cable relative to the at least one mooring line is prevented at one or more positions between the first end second ends of the mooring line.

The one or more positions between the first end second ends of the mooring line are, in particular positions offset from both the first and second ends of the at least one mooring line.

According to a further embodiment, the at least one energy cable is attached to the at least one mooring line at several distinct and spaced apart positions along the at least one mooring line.

Thus, the at least on energy cable can be attached to the at least one mooring line by fixing it at selective positions only.

The positions may, for example, be spaced apart at equal distances. However, the positions may, for example, also be spaced apart at irregular distances.

According to a further embodiment, the at least one energy cable is attached to the at least one mooring line by being integrally formed together with the at least one mooring line.

In particular, the at least one energy cable is integrally formed with the at least one mooring line during manufacture of the at least one mooring line.

By integrally forming the at least one energy cable together with the at least one mooring line a better connection of the energy cable and the at least one mooring line is achieved.

The at least one mooring line is, for example, a wire rope made of several wires bundles or a polymeric rope.

According to a further embodiment, the at least one mooring line comprises a wire rope made of several wire bundles, and the at least one energy cable is integrally formed with the wire rope such that the at least one energy cable replaces at least one wire bundle of the wire rope.

The wire rope is, for example, a steel wire.

The at least one energy cable is, in particular, integrated in the wire rope during manufacture of the wire rope. For example, one or more of the wire bundles conventionally planned for a conventional wire rope are omitted during manufacture of the wire rope and the at least one energy cable takes the place of the omitted wire bundles.

The at least one energy cable is, for example, (fully) surrounded by the wire bundles of the wire rope.

The at least one energy cable is, for example, accommodated in a protection tube and the protection tube is, for example replacing at least one wire bundle of the wire rope.

According to a further embodiment, the at least one energy cable is attached to an outer side of the at least one mooring line.

Thus, the at least one energy cable can be easily attached to a conventional mooring line.

According to a further embodiment, the at least one energy cable is attached to the outer side of the at least one mooring line by mechanical attachment means.

The mechanical attachment means include, for example, clamps, hose clamps, cable connectors, bolts, snap-fit connectors and/or click connectors. The mechanical attachment means are, for example, made from metal such as stainless steel or plastic.

According to a further embodiment, the at least one energy cable is wound around the outer side of the at least one mooring line.

The at least one energy cable is, for example, twisted and/or pitched around the outer side of the at least one mooring line.

Thus, mechanical attachment means are not necessary.

According to a further embodiment, the at least one mooring line comprises a chain including several chain links engaged with each other, and the at least one energy cable is attached to one or more of the chain links.

The chain is, in particular, a linked chain. The chain is, for example, a round link chain having annular, round and/or oval chain links.

According to a further embodiment, the at least one energy cable includes a power cable, an electrical cable, a communication cable, a data cable and/or a gas pipeline.

The power cable and/or an electrical cable is, for example, configured for transmitting power produced by the offshore installation to another offshore or onshore installation. The power cable and/or an electrical cable is, for example, configured for suppling power to the installation from another offshore or onshore installation. The communication cable and/or data cable is, for example, configured for transmitting data to and from the offshore installation to another offshore or onshore installation. The communication cable and/or data cable may, for example, be configured for controlling the offshore installation and/or devices on the offshore installation.

In case of an energy cable including a gas pipeline, the transported gas may include hydrogen, methane, ammonia or any another gas. This may include such gaseous products that are in a liquid state at a certain temperature and/or pressure range. Hence, the energy cable may also be a pipeline configured for transporting a liquid.

According to a further embodiment, the at least one mooring line comprises:
two or more of a group including a wire rope, a polymeric rope and/or a chain, and
one or more coupling members flexibly coupling each pair of two adjacent ones of the two or more of said group.

Having a mooring line comprising different portions made with a different mooring line technique allows an adjustment to loads acting on the mooring line, for example at different water depths.

According to a further embodiment, the at least one energy cable is attached to the at least one mooring line:
in a portion of the at least one mooring line by mechanical attachment means,
in a further portion of the at least one mooring line by being wound around an outer side of the at least one mooring line, and/or
in a further portion of the at least one mooring line by being integrally formed with the at least one mooring line.

Having the at least one energy cable attached to the mooring line in different portions by different attachment techniques allows a design adjusted to specific conditions of an offshore site.

According to a further embodiment, the offshore arrangement comprises a monitoring system for monitoring the at least one energy cable, the at least one mooring line and/or an attachment state of the at least one energy cable attached to the at least one mooring line.

Thus, it is possible to track if there are upcoming potential failures such as detachment of the at least one energy cable from the at least one mooring line. Further, it is possible to monitor the at least one mooring line and determine a potential deviation from a planned position under specific loads from the wind turbine. For example, it can be monitored if an actual trajectory of the at least one mooring line cable is deviating from a planned trajectory.

In addition or instead of a monitoring system located at the floating installation, also a vessel used for installing the at least one mooring line and/or the at least one energy cable may comprise a monitoring system for monitoring the at least one energy cable, the at least one mooring line and/or an attachment state of the at least one energy cable attached to the at least one mooring line.

According to a further aspect, a method for connecting a floating installation of an offshore arrangement, in particular offshore wind farm, with at least one energy cable is proposed. The method comprises the steps of:
a) attaching at least one energy cable to at least one mooring line of the floating installation, the at least one energy cable being configured for transmitting energy to or from the floating installation to or from another offshore and/or onshore installation, and
b) mooring a floating foundation of the floating installation by means of the at least one mooring line.

According to an embodiment of the further aspect, step b) is carried out before step a).

According to a further embodiment of the further aspect, the at least one energy cable is attached onshore or offshore to the at least one mooring line.

The embodiments and features described with reference to the offshore arrangement of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows an offshore arrangement such as an offshore wind farm with several wind turbines such as the wind turbine from Fig. 1, the wind turbines having floating foundations;
Fig. 3 shows a cross-section view of an energy cable of one of the wind turbines of Fig. 2 according to an embodiment, the energy cable being attached to a mooring line of the wind turbine;
Fig. 4 shows a view similar as Fig. 3 but with the energy cable being accommodated in a protection tube;
Fig. 5 shows a portion of a mooring line of one of the wind turbines of Fig. 2 according to an embodiment, an energy cable being wound around the mooring line;
Fig. 6 shows a portion of a mooring line of one of the wind turbines of Fig. 2 according to an embodiment, the mooring line having a chain configuration with an energy cable being attached to chain links of the chain;
Fig. 7 shows a cross-section view of an energy cable of one of the wind turbines of Fig. 2 according to an embodiment, the energy cable being integrally formed with a mooring line of the wind turbine;
Fig. 8 shows a view similar as Fig. 7 but with the energy cable being differently arranged with respect to wire bundles of the mooring line;
Fig. 9 shows a view similar as Fig. 7 but with the energy cable being accommodated in a protection tube;
Fig. 10 shows a wind turbine of the offshore arrangement of Fig. 2 according to an embodiment; and
Fig. 11 shows a flow chart illustrating a method for connecting a floating installation of an offshore arrangement, in particular offshore wind farm, with at least one energy cable according to an embodiment.

In the Figures, like reference numerals designate like or functionally equivalent elements, unless otherwise indicated.

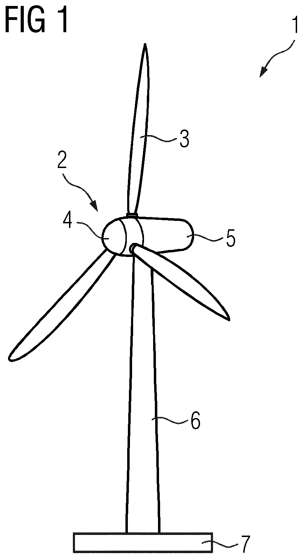

Fig. 1 shows a wind turbine 1 according to an embodiment. The wind turbine 1 is in particular an offshore wind turbine. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a floating foundation 7.

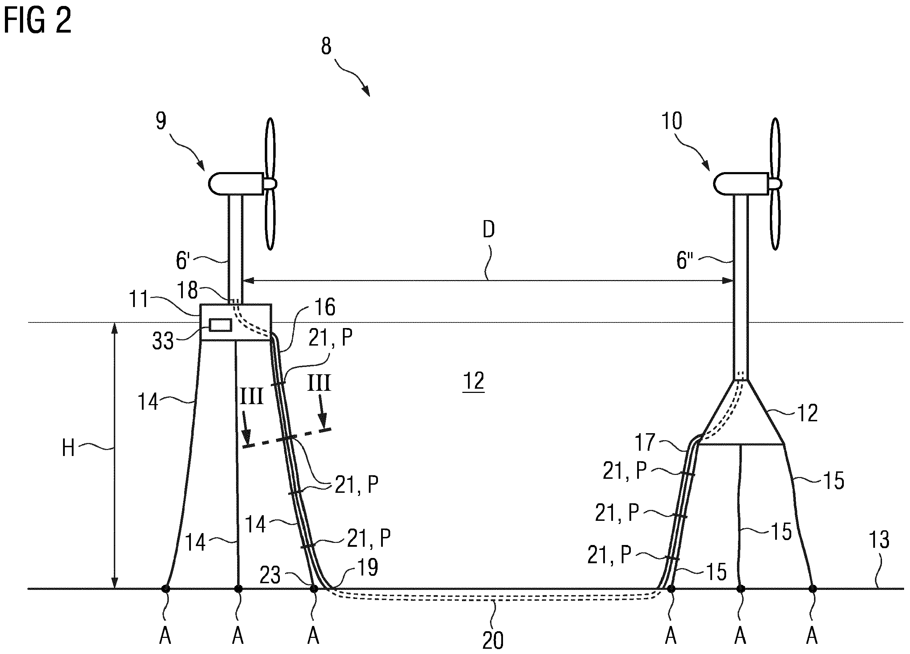

Fig. 2 shows an offshore arrangement 8. The offshore arrangement 8 may be an offshore wind farm. The offshore arrangement 8 comprises at least one offshore installation 9, 10. In the shown example, the offshore installations 9, 10 are offshore wind turbines 9, 10 such as the wind turbine 1 shown in Fig. 2. The following description refers to offshore wind turbines 9, 10. However, in other examples, one, more or all of the offshore installations 9, 10 may also be other offshore installations such as a substation, another energy producing installation, an oil platform and the like. Further, there are exemplarily two offshore installations 9, 10 shown in Fig. 2. However, the offshore arrangement 8, e.g., the offshore wind farm 8, may comprise more than two offshore installations 9, 10.

The wind turbines 9, 10 each comprise a floating foundation 11, 12. The wind turbine 9 comprises, for example, a floating foundation 11 which is partly submerged in the sea water 12. The wind turbine 10 comprises, for example, a floating foundation 12 which is fully submerged in the sea water 12. The floating foundations 11, 12 are each moored to a seabed 13 by means of mooring lines 14, 15. In the example shown in Fig. 2, each floating foundation 11, 12 is moored to the seabed 13 by means of three mooring lines 14, 15. However, there may also be another number of mooring lines 14, 15 applied. Further, each mooring line 14, 15 may, for example, be anchored to the seabed 13 by means of an anchor A.

The wind turbines 9, 10 comprise energy cables 16, 17. The energy cables 16, 17 are, for example, electrical cables for electrically connecting the wind turbines 9, 10 to another offshore installation such as the other wind turbine 9, 10 or another offshore or onshore installation.

In the shown example in Fig. 2, the energy cable 16 of the wind turbine 9 is electrically connected at its first end 18 to the tower 6', e.g., to an electrical device such as a switch gear, bus bar or transformer (not shown) arranged in the tower 6', the nacelle 5 and/or in or at the floating foundation 11 of the wind turbine 9. Further, the energy cable 16 is connected at its other end 19 to another energy cable 20. The energy cable 20 is, for example, buried in the seabed 13. Further, in the shown example, the energy cable 20 is connected to the energy cable 17 of the wind turbine 10. Thus, the wind turbines 9 and 10 are, for example, electrically connected with each other by means of the energy cables 16, 20, 17. Further, the energy cables 16, 20, 17 are, for example, integrally formed.

In a variant of Fig. 2, the energy cable 16 of the wind turbine 9 is a gas pipeline connected to a gas producing unit (not shown) arranged in the tower 6', the nacelle 5 and/or in or at the foundation 11 of the wind turbine 9.

The energy cables 16, 17 are, in particular, hanging from the respective tower 6', 6" of the wind turbine 9, 10 to the seabed 13. In order to reduce the load acting due to ocean currents, tides and/or waves on the energy cables 16, 17, they are attached to a respective mooring line 14, 15.

As shown in Figs. 2 to 4, the energy cable 16 is, for example, attached to one of the mooring lines 14 by mechanical attachment means 21. The mechanical attachment means 21 are, for example, clamps such as hose clamps or cable connectors. Each of the mooring lines 14 is, for example, fixed at its first end 22 to the floating foundation 11 and is fixed at its second end 23 to the anchor A and/or the seabed 13. Further, the energy cable 16 is attached to one of the mooring lines 14 at several positions P. The attachment positions P are arranged between the first end second ends 22, 23 of the respective mooring line 14. In Fig. 2, there are exemplarily four attachment positions P shown. However, there may be more or less than four attachment positions P of the energy cable 16 and the respective mooring line 14. In particular, depending on the water depth H at the respective wind turbine 9, the number may be significantly higher than four.

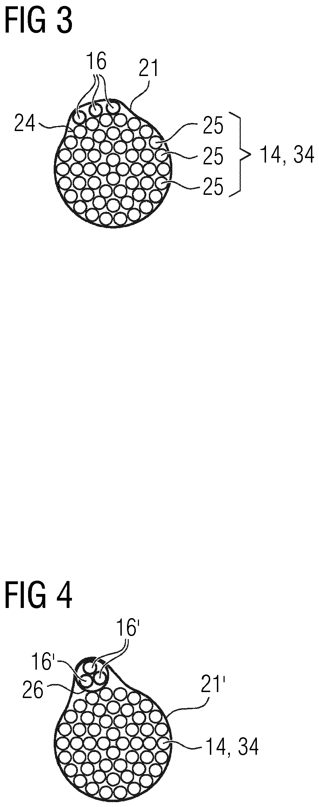

Fig. 3 shows a cross-section view of the energy cable 16 and the mooring line 14 to which the energy cable 16 is attached. The cross-section is taken along line III in Fig. 2. As can be seen in Fig. 3, the energy cable 16 is, for example, attached to an outer side 24 of the mooring line 14 by the mechanical attachment means 21. The mechanical attachment means 21 are, for example, surrounding the respective mooring line 14 and the energy cable 16 as seen in cross-section. The mechanical attachment means 21 are, for example, forming a (e.g., closed) loop around the respective mooring line 14 and the energy cable 16 as seen in cross-section.

As further shown in Fig. 3, the mooring line 14 may be a wire rope 34 such as a steel wire rope comprising several wire bundles 25. Some of the wire bundles 25 have been denoted with a reference sign in Fig. 3. In other examples, the mooring lines 14 may also have a different configuration. The mooring lines 14 in Figs. 3 and 4 may, for example, also be a polymeric rope and/or a chain.

Fig. 4 shows a view similar as Fig. 3 but with the energy cable 16' being accommodated in a protection tube 26. Further, the protection tube 26 is attached to the respective mooring line 14 by mechanical attachments means 21' similar as the attachment means 21 shown in Figs. 2 and 3.

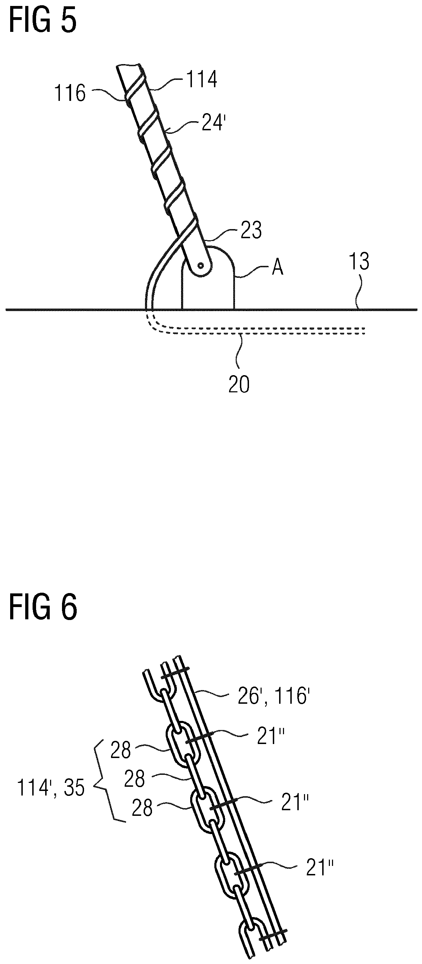

As shown in Fig. 5, an energy cable 116 of the wind turbine 9, 10 of Fig. 2 according to an embodiment may also be attached to an outer side 24' of the respective mooring line 114 by being wound around the mooring line 114. The energy cable 116 is, for example, pitched around the mooring line 114. Further, close to the seabed 13, the energy cable 116 may be guided towards the seabed 13 to be joined with the energy cable 20 buried in the seabed 13.

Fig. 6 shows a portion of a mooring line 114' according to an embodiment, the mooring line 114' having a chain configuration 35. In particular, the mooring chain 114' comprises several chain links 28 engaged with each other to form the chain 35. The chain inks 28 are, for example, oval shaped. The energy cable 116' is attached to one or more of the chain links 28 of the mooring chain 114'. The energy cable 116' is, for example, accommodated in a protection tube 26' attached to the chain links 28 of the mooring chain 114'.

In Figs. 2 to 6, the energy cable 16, 16', 17, 116, 116' is attached to the outer side 24, 24' of the respective mooring line 14, 114, 114'.

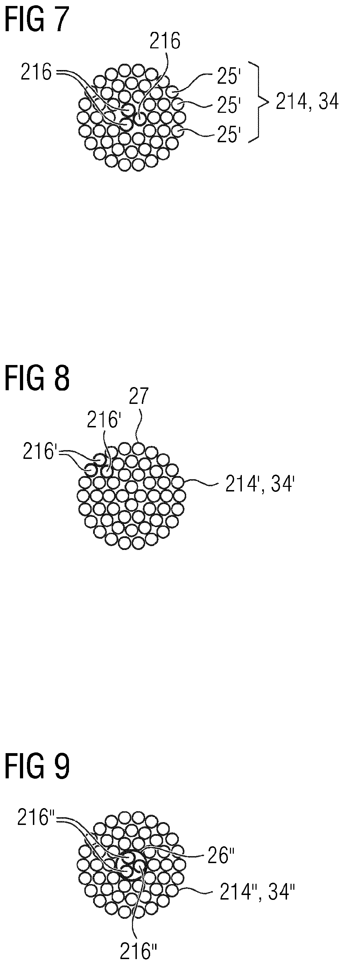

However, as shown in Figs. 7 to 9, the energy cable 216, 216', 216" may also be integrally formed together with the at least one mooring line 214, 214', 214".

Fig. 7 shows a cross-section view of an energy cable 216 of the wind turbine 9 according to a further embodiment, the energy cable 216 being integrally formed with a respective mooring line 214. It is noted that the cross-section shown in Figs. 7 to 9 has a similar orientation as the cross-section of Figs. 3 and 4.

As shown in Fig. 7, the mooring line 214 may be a wire rope 34' such as a steel wire rope comprising several wire bundles 25'. Some of the wire bundles 25' have been denoted with a reference sign in Fig. 7. In other examples, the mooring line 214 may also have a different configuration that allows for integration with the energy cable 216 during manufacture. The mooring line 214 in Fig. 7 may, for example, also be a polymeric rope.

The energy cable 216 is, for example, integrally formed with the mooring line 214, e.g., the wire rope 34', such that the energy cable 216 replaces at least one wire bundle of the wire rope 34'. In other words, during manufacture of the wire rope 34', one or more of the wire bundles conventionally planned for a conventional wire rope are omitted and the energy cable 216 takes the place of the omitted wire bundles. In the example of Fig. 7, the energy cable 216 replaces wire bundles in the interior of the wire rope 34'. Fig. 8 shows another example, in which the energy cable 216' replaces wire bundles at an edge region 27 of the wire rope 34'.

Similar as in the example of Fig. 4, also in the case of the energy cable 216, 216' being integrally formed with the respective mooring line 214, 214' (Figs. 7 and 8), the energy cable 216, 216' may be accommodated in a protection tube similar as the protection tube 26 shown in Fig. 4. This is illustrated in Fig. 9 which shows a configuration similar as Fig. 8 but with the energy cable 216" being protected by a protection tube 26". Further, the protection tube 26" accommodating the energy cable 216" is integrated with the respective mooring line 214" during manufacture of the mooring line 214".

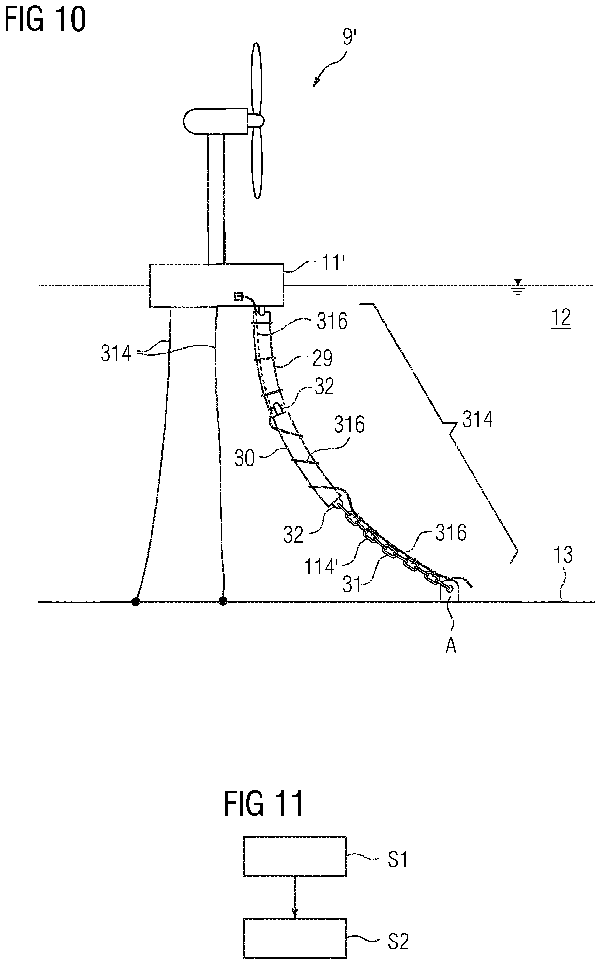

As shown in Fig. 10, a wind turbine 9' similar as the wind turbine 9 (Fig. 2) may comprise at least one mooring line 314 including two or more different portions 29, 30, 31 connected with each other. The different portions 29, 30, 31 comprise different kinds of mooring lines. For example, the portion 29 of the mooring line 314 is configured similar as the mooring line 214, 214', 214" shown in any of Figs. 7 to 9. For example, the portion 30 of the mooring line 314 is configured similar as the mooring line 114 shown in Fig. 5. For example, the portion 31 of the mooring line 314 is configured as a chain similar as the chain 35 of the mooring line 114' shown in Fig. 6.

The portions 29, 30, 31 are, for example, connected to each other by coupling members 32 (Fig. 10). The coupling members 32 are, for example, flexibly coupling each pair of two adjacent portions of the portions 29, 30, 31.

Furthermore, the energy cable 316 is, for example, attached to the mooring line 314 in the portion 31 by mechanical attachment means such as the mechanical attachment means 21, 21', 21" shown in Figs. 3, 4 and 6. For example, the energy cable 316 is attached to the mooring line 314 in the portion 30 by being wound around an outer side of the at least one mooring line 314, similar such as the energy cable 116 shown in Fig. 5 being wound around the outer side 24' of the mooring line 114. For example, the energy cable 316 is attached to the mooring line 314 in the portion 29 by being integrally formed with the mooring line 314 in this portion 29, similar as the energy cable 216, 216', 216" shown in Figs. 7 to 9.

The offshore arrangement 8 may further comprise a monitoring system 33 (Fig. 2) for monitoring the at least one energy cable 16, the at least one mooring line 14 and/or an attachment state of the at least one energy cable 16 attached to the at least one mooring line 14. It is noted that the monitoring system 33 shown exemplarily in Fig. 2 can be applied to monitor any of the energy cables and mooring lines described herein.

In the following, a method for connecting a floating installation 9 (Fig. 2) of an offshore arrangement 8, in particular offshore wind farm, with at least one energy cable 16 is described with respect to Fig. 11.

In a first step S1 of the method, the at least one energy cable 16 is attached to at least one mooring line 14 of the floating installation 9. The at least one energy cable 16 is configured for transmitting energy to or from the floating installation 9 to or from another offshore and/or onshore installation 10.

In a second step S2 of the method, a floating foundation 11 of the floating installation 9 is moored by means of the at least one mooring line 14.

The method can be applied for any of the described floating installations 9, 9', 10, any of the described energy cables 16, 16', 116, 116', 216, 216', 216", 316 and any of the described mooring lines 14, 114, 114', 214, 214', 214", 314.

Furthermore, the at least one energy cable 16 may be attached onshore or offshore to the at least one mooring line 14. In case of an offshore attachment of the at least one energy cable 16 to the at least one mooring line 14, a vessel and/or a marine vehicle may be used. The marine vehicle is, for example, a remote operated vehicle (ROV) operated from a vessel such as a platform supply vessel (PSV).

Step S1 may be carried out before step S2. Alternatively, step S2 may also be carried out before step S1.

Although the present invention has been described in accordance with preferred embodiments, it is obvious for the person skilled in the art that modifications are possible in all embodiments.

## Claims

1. An offshore arrangement (8), in particular offshore wind farm, with at least one floating installation (9), the at least one floating installation (9) comprising:
a floating foundation (11),
at least one mooring line (14) for mooring the floating foundation (11) to the seabed (13), and
at least one energy cable (16) for transmitting energy to or from the at least one floating installation (9) to or from another offshore and/or onshore installation (10), the at least one energy cable (16) being attached to the at least one mooring line (14).

2. The offshore arrangement according to claim 1, comprising at least one protection tube (26) accommodating the at least one energy cable (16'), the at least one protection tube (26) being attached to the at least one mooring line (14).

3. The offshore arrangement according to claim 1 or 2, wherein the at least one mooring line (14) is fixed at its first end (22) to the floating foundation (11) and is configured for being anchored at its second end (23) to the seabed (13), and the at least one energy cable (16) is attached to the at least one mooring line (14) at one or more positions (P) between the first end second ends (22, 23) of the mooring line (14).

4. The offshore arrangement according to one of claims 1 - 3, wherein the at least one energy cable (16) is attached to the at least one mooring line (14) at several distinct and spaced apart positions (P) along the at least one mooring line (14).

5. The offshore arrangement according to one of claims 1 - 3, wherein the at least one energy cable (216) is attached to the at least one mooring line (214) by being integrally formed together with the at least one mooring line (214).

6. The offshore arrangement according to claim 5, wherein the at least one mooring line (214) comprises a wire rope (34') made of several wire bundles (25'), and the at least one energy cable (216) is integrally formed with the wire rope (34') such that the at least one energy cable (216) replaces at least one wire bundle (25') of the wire rope (34').

7. The offshore arrangement according to one of claims 1 - 4, wherein the at least one energy cable (16) is attached to an outer side (24) of the at least one mooring line (14).

8. The offshore arrangement according to claim 7, wherein the at least one energy cable (16) is attached to the outer side (24) of the at least one mooring line (14) by mechanical attachment means (21).

9. The offshore arrangement according to claim 7 or 8, wherein the at least one energy cable (116) is wound around the outer side (24') of the at least one mooring line (114).

10. The offshore arrangement according to one of claims 1 - 4 or 7 - 9, wherein the at least one mooring line (114') comprises a chain (35) including several chain links (28) engaged with each other, and the at least one energy cable (116') is attached to one or more of the chain links (28).

11. The offshore arrangement according to one of claims 1 - 10,
wherein the at least one energy cable (16) includes a power cable, an electrical cable, a communication cable, a data cable and/or a gas pipeline.

12. The offshore arrangement according to one of claims 1 - 11, wherein the at least one mooring line (314) comprises:
two or more of a group including a wire rope (34), a polymeric rope and/or a chain (35), and
one or more coupling members (32) flexibly coupling each pair of two adjacent ones of the two or more of said group.

13. The offshore arrangement according to one of claims 1 - 12, wherein the at least one energy cable (316) is attached to the at least one mooring line (314):
in a portion (31) of the at least one mooring line (314) by mechanical attachment means (21, 21', 21"),
in a further portion (30) of the at least one mooring line (314) by being wound around an outer side (24') of the at least one mooring line (314), and/or
in a further portion (29) of the at least one mooring line (314) by being integrally formed with the at least one mooring line (314).

14. The offshore arrangement according to one of claims 1 - 13, comprising a monitoring system (33) for monitoring the at least one energy cable (16), the at least one mooring line (14) and/or an attachment state of the at least one energy cable (16) attached to the at least one mooring line (14).

15. A method for connecting a floating installation (9) of an offshore arrangement (8), in particular offshore wind farm, with at least one energy cable (16), comprising the steps of:
a) attaching (S1) the at least one energy cable (16) to at least one mooring line (14) of the floating installation (9), the at least one energy cable (16) being configured for transmitting energy to or from the floating installation (9) to or from another offshore and/or onshore installation (10), and
b) mooring (S2) a floating foundation (11) of the floating installation (9) by means of the at least one mooring line (14).
